Europäisches Patentamt

**European Patent Office**

Office européen des brevets

(19)

(11) Publication number: **0 099 945**
A1

(12) **EUROPEAN PATENT APPLICATION**

(21) Application number: 82303906.0

(22) Date of filing: 23.07.82

(51) Int. Cl.³: **F 16 K 43/00,** F 16 K 7/16

(43) Date of publication of application: **08.02.84**
**Bulletin 84/6**

(84) Designated Contracting States: **DE FR IT NL**

(71) Applicant: **WATERFIELD ENGINEERING LIMITED,**
**71 Kingsway, Chandler's Ford Hampshire S05 1FH (GB)**

(72) Inventor: **Waterfield, Timothy Ottiwell Wykeham,**
**71 Kingsway, Chandler's Ford Hampshire S05 1FH (GB)**

(74) Representative: **Massey, Alexander et al, MARKS &**
**CLERK Scottish Life House Bridge Street, Manchester,**
**M3 3DP (GB)**

(54) **Improvements in or relating to soft seating valves.**

(57) A diaphragm valve has an asymmetric compressor (14) for moving the diaphragm between open and closed positions. The asymmetric compressor is movable carried by an operating spindle (15) so that if, for any reason, the diaphragm is destroyed, the asymmetric compressor (14A, 14B) makes emergency sealing with the valve body (10), preferably downstream of the valve body in the direction of fluid flow through the valve. An emergency "indestructible" sealing member (20) is preferably mounted in the compressor or valve body.

COMPLETE DOCUMENT

0099945

2.

This invention relates to soft seating valves commonly referred to as diaphragm valves or pinch valves. The characteristic feature of these valves is the use of an elastomer to close the valve and provide the primary seal to atmosphere for the fluid contained in and passing through the valve.

It is an object of the present invention to provide a soft seating valve having an improved emergency shut-off characteristic than is presently available with such valves upon destruction of the sealing elastomer (diaphragm or tube) caused, for example, by fire or severe chemical attack.

According to the present invention there is provided a soft seating valve comprising a body defining a through-flow passage, an elastomeric sealing or closure member associated with the body, and a compressor means mounted on the body and operatively connected with the elastomeric sealing or closure member to move the latter between positions in which the through-flow passage is fully open or fully closed, the valve being characterised in that the compressor means is of asymmetric construction and is adapted, upon destruction of the elastomeric sealing member, to make emergency sealing engagement with the valve body to close the through-flow passage. The valve is a diaphragm valve and preferably has a normally-ineffective emergency sealing member associated with the diaphragm and/or compressor means and/or valve body which is adapted, upon destruction of the elastomeric sealing member, to be urged into a position sealing off the through-flow passage of the valve.

Preferably, the valve is a diaphragm valve having an elastomeric diaphragm connected to and movable by a compressor which has incorporated therein, or otherwise associated therewith, an emergency sealing member, preferably indestructible, adapted to be resiliently or otherwise urged into a position relative to the valve body whereby the downstream side of the valve is sealed.

In one embodiment, the compressor is, as usual, secured to the valve operating spindle but is split into an upstream part fixed relative to the spindle, and a downstream part forcibly movable relative to the spindle, upon diaphragm destruction, to urge the emergency indestructible sealing member carried thereby into sealing engagement with the valve body.

The downstream compressor part is preferably spring-loaded to valve-closed position.

The split compressor is preferably constructed with the downstream part the larger of the two parts.

In a second embodiment, the compressor is of unitary construction and is forcibly and bodily movable relative to the spindle, upon diaphragm destruction, to urge the emergency indestrucible sealing member,

0099945

which is on the downstream side of the valve, into
sealing engagement with the valve body.

Here again, the compressor is spring-loaded
to valve-closed position.

The asymmetric nature of the compressor in both
embodiments is such as to permit, upon diaphragm
destruction, upstream fluid pressure to communicate
with the rear of the compressor and so assist, or,
indeed, if the spring loading is omitted to effect
emergency closure.

In a third embodiment, the compressor at its
downstream side incorporates a spring-loaded piston
adapted to engage a valve seat on the valve body
to seal the downstream side of the valve,
upon diaphragm construction.  This construction may be
reversed, i.e. spring-loaded piston in body, seat
on compressor.

Here again, the compressor is movable relative to
the valve spindle, and fluid pressure may assist
emergency closure.

In all of these embodiments, one or more burst
holes can be formed in the upstream side or part of
the compressor to encourage early destruction of
the diaphragm under emergency conditions and also to
assist communication of line pressure to the compressor
rear.

An alternative method of encouraging early diaphragm destruction is to make the upstream flexing side of the diaphragm thinner than the downstream side.

It is also envisaged that diaphragm-puncturing means may be employed to obtain early application of line pressure to the compressor rear. Such means may be manually, remotely or automatically, e.g. fusible capsule, operated.

With diaphragm valves, it is well known that the operating mechanism i.e. the operating spindle, is housed in a bonnet assembly which is bolted to the valve body with the periphery of the diaphragm clamped between the bonnet and the body. Such a valve may, of course, be manually operated or remotely operated by hydraulic, pneumatic or electrical means.

It has previously been proposed to provide a diaphragm valve comprising a body traversed by a fluid passageway and having an opening in communication with the passageway, a diaphragm for controlling fluid flow through the passageway and extending across the opening, and a bonnet secured to the body with the peripheral portion of the diaphragm clamped between the bonnet and body, the body being provided around the opening with a diaphragm support face formed by two flat surfaces which extend normal to the passageway and

6.

are inclined relative to each other so as to be divergent in the direction of the opening, and the bonnet being provided with a diaphragm clamping face comprising two flat surfaces which are inclined relative to each other so as to converge at the bottom end of the bonnet.

Such an inclined clamping arrangement exerts an even clamping force on the periphery of the diaphragm independently of the magnitude of the gap between the flat surfaces, and also permits the production of a diaphragm valve with straight through fluid flow.

With such a known diaphragm valve the bonnet, diaphragm and body are bolted together and this requires accurate drilling of the bolt-receiving holes in the bonnet and body. As the body may be lined with rubber, ceramic, plastics material or glass there is a danger that the lining can be cracked when the drilled bolt holes are cleaned out. Also it necessitates accurate drilling of the diaphragm after moulding to provide passage for the bolts which can, of course, adversely affect the moulded diaphragm. It is known that with such a bolting arrangement leakage can occur down the bolt holes without detection.

It is therefore a subsidiary object of the present invention to provide a diaphragm valve which dispenses with the need of accurate drilling and in which any leakage from the valve is discernible before reaching the bolts.

7.

To achieve this object, the diaphragm valve has a bonnet formed with holes while the valve body has complementary open-sided lugs to receive the securing bolts, the diaphragm being clamped between the bonnet and the body and being recessed in the regions of the securing bolts.

The present invention is illustrated by way of diaphragm valves which have a number of conventional features, well known to those skilled in the art, which, for convenience, are not illustrated nor described in detail herein or only briefly so. Briefly, such features include, inter alia:-

1. The provision of secondary seating to atmosphere between the valve bonnet and body and the spindle operating mechanism. The techniques used are well established and involve the mating of accurately manufactured surfaces and the use of an indestructible material such as asbestos.

2. Clamping means between the valve body and bonnet to secure same together.

3. Operating mechanism - this is illustrated in the present specification as a simple spindle but any rotary or axial means of manual or remote operation can be used.

4. Attachment of the diaphragm to the compressor - when required this will be by means of a stud or studs remote from the emergency seat seating line. In the event of only the edges and normal seat seating part of the diaphragm being destroyed it is important to prevent large parts of the diaphragm being carried downstream.

5. Guides to prevent rotation of the compressor assembly during opening and closing of the valve. Additionally when a split compressor is used one half must be able to move axially independently of the other.

6. Housing and captivation of springs to prevent their ejection.

Embodiments of the present invention will now be described, by way of example, with reference to the accompanying drawings, in which:-

Fig. 1 is a longitudinal sectional view of a diaphragm valve according to the present invention in the normal valve-closed position;

Fig. 2 is a corresponding part-sectional plan view on the line II-II of Fig. 1;

Fig. 3 is a view corresponding to Fig. 1 with the valve in the emergency closed position;

Fig. 4 is a view similar to Fig. 3 of an alternative valve construction;

Fig. 5 is a part-sectional plan view on the line V-V of Fig. 4;

Fig. 6 again is a view similar to Fig. 3 of yet another valve construction;

Fig. 7 is a plan view of one diaphragm construction for use in a valve according to the invention;

Fig. 8 is a sectional view on the line VIII-VIII of Fig. 7;   and

Fig. 9 is a side elevation, partly in cross-section, illustrating other features of a diaphragm valve according to the present invention;

Fig. 10 is an end view, partly in section, of the diaphragm valve of Fig. 9;

Fig. 11 is a partial side elevation of the diaphragm valve of Fig. 9;

Fig. 12 is a partial plan view of the body showing the diaphragm support face;

Fig. 13 is a side elevation, partly in cross-section of a modification of the diaphragm valve of Figs. 9 to 12;

Fig. 14 is a fragmentary detail of the valve of Fig. 13 showing diaphragm destruction; and

Fig. 15 is a detail of a diaphragm-securing stud.

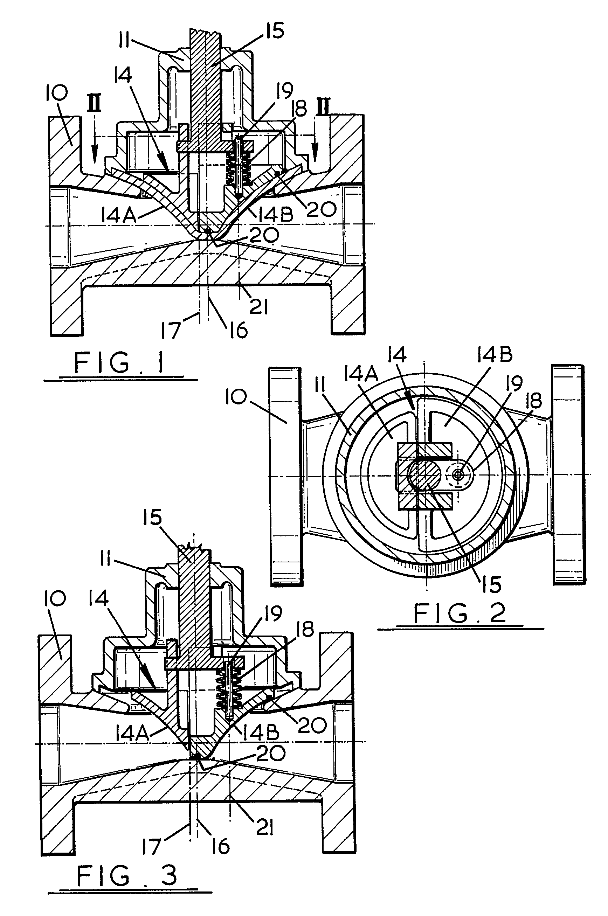

Reference is made to Figs. 1 to 3 which show a diaphragm valve comprising a valve body 10 and valve bonnet or cover 11 between which are clamped a valve-closing diaphragm 12, the latter being secured between the bonnet 11 and seating flanges 13 of the valve body 10.

The diaphragm 12 is secured to a compressor 14 which is, in turn, secured to a valve-operating spindle 15.

The compressor 14 is asymmetric (see Fig. 2) to the spindle centre line 16 and is split along line 17 into a small upstream part 14A and a large downstream part 14B. Upstream compressor part 14A is fixed relative to the spindle 15, while downstream compressor part 14B is capable of movement relative to the spindle 15 under the influence of spring discs 18 surrounding a guide pin 19 secured to the downstream compressor part 14B and traversing a hole in the spindle 15.

An emergency indestructible sealing member 20 formed, for example, of asbestos is incorporated in the downstream compressor part 14B or the downstream side of the diaphragm 12.

The spring effort axis is indicated at 21.

Upon destruction of the diaphragm 12, for whatever reason, when the diaphragm 12 is in the

0099945

normal closed position the downstream compressor part 14B is immediately spring urged to bring the emergency sealing member 20 into contact with the valve body 10 and seating flanges 13, to seal off the downstream side of the valve and prevent continuing flow through the valve.

This emergency closure is powerfully assisted by line pressure acting on the rear or back face of the compressor 14, access thereto being facilitated by the asymmetric nature of the split compressor (see Figs. 2 and 3).

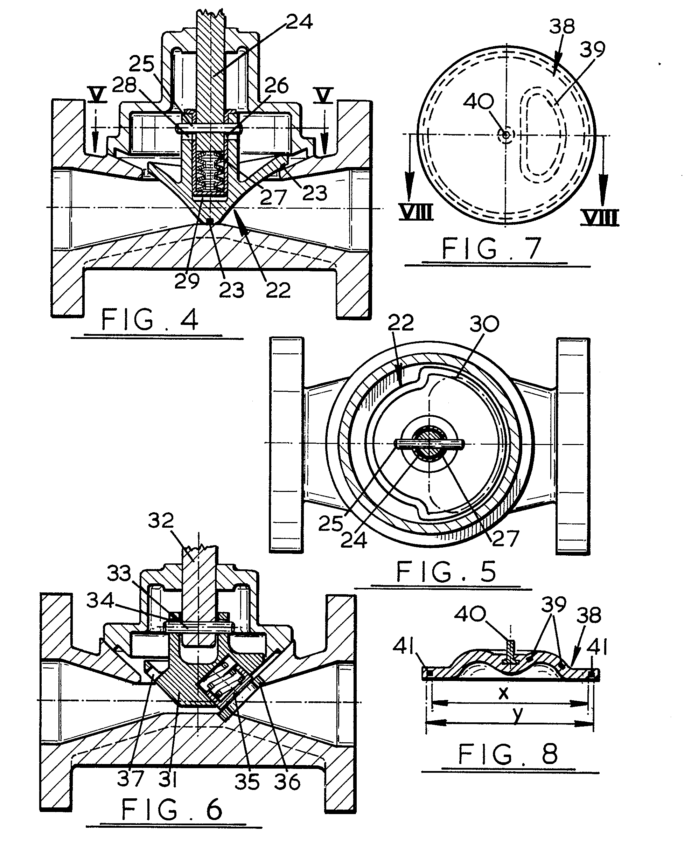

It is to be noted that improved emergency closure is obtained by reducing the length of the emergency seating line between the compressor 14, valve body 10 and valve seating flanges 13 by suitably shaping the contour of the emergency sealing member which cooperates with the valve body 10. In this regard see Figs. 5 and 7.

It should be noted that the spring effort axis need not be parallel with the spindle axis. It may be inclined if this would make better use of the spring seating force. The seating force can be applied by means other than mechanical springs, e.g. it may be applied manually or by means of a fusible plug.

There may, of course, be multiple seating force units (spring or otherwise) and the seating force instead of being applied through the compressor may

12.

be applied through the spindle or indeed through a separate mechanical system associated with the compressor and/or spindle.

The position of the emergency seal line need not coincide with the normal seating position of the flexible diaphragm.

Under normal opening and closing conditions the relatively-movable compressor parts are not harmful to the diaphragm. On opening the spring 18 does cause relative movement between the two compressor parts 14A, 14B but suitable designing ensures no adverse effects on the diaphragm.

It is to be noted that if the diaphragm is destroyed with the valve fully open or in an intermediate position then the valve is operated in the usual way to effect closure.

Reference is now made to Figs. 4 and 5 and for convenience only the differences compared to Figs. 1 to 3 will be described.

In this embodiment the compressor 22 is again of asymmetric construction but is of unitary construction with the emergency indestructible sealing member 23 at its downstream side.

The spindle 24 has a cross-pin 25 which extends through elongate slots 26 in the sides of a cap 27 and registering elongate slots 28 in the compressor 22. The cap 27 fits into a recess 29 in the compressor 22 for movement therewith. Within the cap 27 and compressed between same and the end of the spindle 24 are spring discs 29.

It will be manifest that when the valve is operating normally, the cross-pin 25 will lie towards the bottom of slots 26 and 28 but, upon diaphragm destruction, the spring discs 29 urge the cap 27 and compressor 22 down to seat the emergency sealing member 23 as shown and thereby seal the downstream side of the valve.

The emergency sealing line 30 can be seen in Fig. 5. If desired, this can be offset to the spindle centre line.

Otherwise, the features and functioning aspects described with reference to Figs. 1 to 3 apply equally well to this embodiment.

Referring now to Fig. 6, it can be seen that the compressor 31 is of asymmetric and unitary construction and can move axially relative to the spindle 32 due to the cross-pin 33 in the spindle 32 and elongate slots 34 in the compressor 31.

In this instance, the compressor 31 at its downstream side houses a spring-loaded sealing piston 35 which, when, as shown, the diaphragm is destroyed, seals against a valve seat 36 in the downstream side of the valve.

In this instance also, a bursting hole 37 (more than one may be provided) is formed in the upstream

14.

side of the compressor 31 to encourage early diaphragm destruction under emergency conditions and also to assist communication of line pressure to the rear or back face of the compressor 31.

Such early destruction may be effected by making the diaphragm of reduced thickness on its upstream side or by providing means for intentionally bursting the diaphragm under emergency conditions.

These early destruction facilities are applicable to the other embodiments of diaphragm valve disclosed herein.

In this embodiment the components effecting the emergency sealing are easier to machine.

In a modification of this embodiment, the spring-loaded piston may be mounted in the valve body and the valve seat on the compressor. When, in this case, the valve is opened the piston partially moves into the flow passage sufficiently slightly to impair the fluid flow but not sufficiently to close the flow passage. The sealing member may be conical or spherical and several such seals may be provided in the compressor and/or valve body.

Reference is finally made to Figs. 7 and 8 which shows a diaphragm 38 into which indestructible material 39 has been introduced during manufacture. This material 39 provides the emergency sealing member when the remainder of the diaphragm 38 has been destroyed. With a suitable emergency sealing effort

0099945

this will seal on a valve seat to close the valve.

The emergency shut-off line can be along the conventional diaphragm sealing line or positioned over a port in the valve body.

The stud 40 (or studs) securing the diaphragm 38 to the compressor can be used to assist in locating the indestructible material 39 during manufacture.

The indestructible seal 39 may be stabilised with metal rings 41 to improve its performance during emergency operation. This is shown in the peripheral seal (Fig. 8) which has vertical sided metal rings of diameters "x" and "y".

It is conceivable that the separate emergency sealing member be omitted in the embodiments of Figs. 1 to 5 and that emergency sealing be obtained by metal-to-metal contact between the compressor and valve body.

It is also considered possible to reverse the upstream and downstream sides of the valve by the use of suitable emergency closing forces (e.g. suitable spring forces).

Finally, it is envisaged that no separate closing forces be provided in the valves, the emergency closing forces being obtained purely from line pressure.

In a pinch valve, as is well known to those skilled in the art, the flexible tube is closed or "pinched" by a compressor similar to that employed

16.

in diaphragm valves and it will accordingly be manifest that the present invention is equally applicable to pinch valves.

In the case of a diaphragm valve opening and closing of the valve is effected by movement of an elastomeric diaphragm across the flow passage, whereas in the case of a pinch valve the flow passage is through an elastomeric tube which is compressed to restrict or stop flow and released to permit flow.

References hereinbefore and in the claims to "elastomeric sealing member" are to be interpreted as including both a diaphragm and a flexible tube.

It is envisaged that the same emergency closure functioning can be obtained with a symmetric compressor if one side, usually the upstream side, of the compressor is ported (one or more ports), or alternatively if both sides, upstream and downstream, are provided with porting of different areas.

It will be manifest that, upon diaphragm destruction fluid pressure will act upon the back side of the compressor through the port or ports to move the compressor into a closed position.

The compressor assembly construction may be in accord with any of the embodiments described above save that it is symmetric.

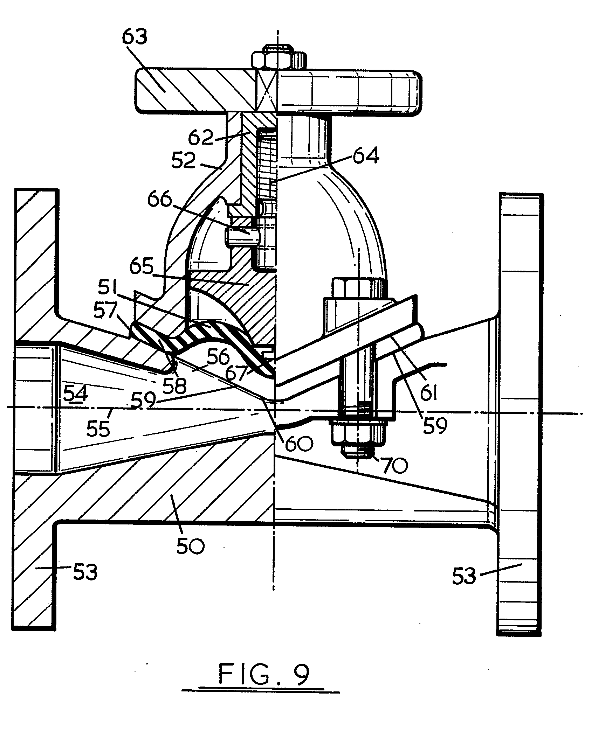

The diaphragm valve of Figures 9 to 12 comprises a body 50, a flexible diaphragm 51 and a bonnet 52. The body 50 is provided with end flanges 53 and a passageway 54 having a straight longitudinal axis 55. At each end region the passageway 54 is circular and this merges to an elliptical or substantially elliptial cross-section in its mid-length region. The body 50 is provided with an opening 56 which may be oval or circular and which communicate with the passageway 54 and is surrounded on the outside of the body 50 by a support fact 57 against which a peripheral flange portion 58 of the diaphragm 51 seats. The support face 57 is formed by two flat surfaces 59 which are inclined relative to each other and diverge upwardly as viewed in Figure 9. The flat surfaces 59 are joined together by curved surfaces 60.

The peripheral portion 58 of the diaphragm 51 seats on the surfaces 59 and 60 and the diaphragm 51 extends across the opening 56. The diaphragm 51 can be formed from any suitable elastomeric material, such as natural or synthetic rubber or a flexible plastics material and it may be reinforced by a suitable fabric. The diaphragm 51 may be of a composite construction i.e. rubber faced with a plastics material such as polytetrafluoroethylene. Although some of these materials are not compressible in the true sense of this word the term "compression" used in the specification is intended to describe what

18.

is really a displacement of elastomer. The required compression of the peripheral portion 58 will vary with the type of elastomer and reinforcing fabric used, the pressure or vacuum in the passageway 54, the finish of the body material (plain cast iron or glass lined) and manufacturing errors. As an example the compression of a natural rubber diaphragm 51 fitted to a cast iron body 50 will be approximately 20%.

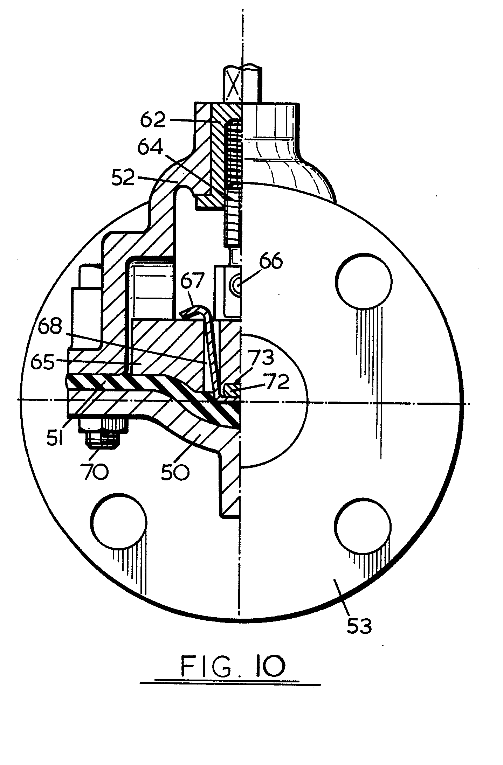

The bonnet 52 is substantially bell-shaped and at its bottom end it is provided with flat surfaces 61 which are inclined relative to each other so as to converge at the bottom of the bonnet 52. The angle of inclination of the surfaces 51 is identical with that of surfaces 49. Housed in the bonnet 52 is the operating mechanism which consists of a bush 62 which is rotatably mounted in the bonnet 52 and is connected to a handwheel 63. The bore of the bush 62 is screw-threaded and in screw-threaded engagement therewith is a screw-threaded spindle 64. Mounted on the lower end of the spindle 64 is a member 65 which is secured thereto by a pin 66. Fixed to the diaphragm 51 is a substantially U-shaped retainer member 67, the two limbs of which extend through holes 68 in the member 65 and are bent over at their outer end to hold the diaphragm 58 on the member 65. In Figure 9 the operating mechanism and diaphragm 58 are shown in the valve open position and in Fig. 10 the operating mechanism and diaphragm 58 are shown in the valve closed position.

0099945

It is desirable that when the bonnet 52 is bolted to the body 50 there is the minimum of compression of the diaphragm 51 at its peripheral flange 58, consistent with sealing to atmosphere and preventing the edges of the diaphragm 51 being pulled inwardly when there is pressure inside the valve, in order to extend the life of the diaphragm 51. This is obtained with the flat clamping flanges of the bonnet 52 and the body 50.

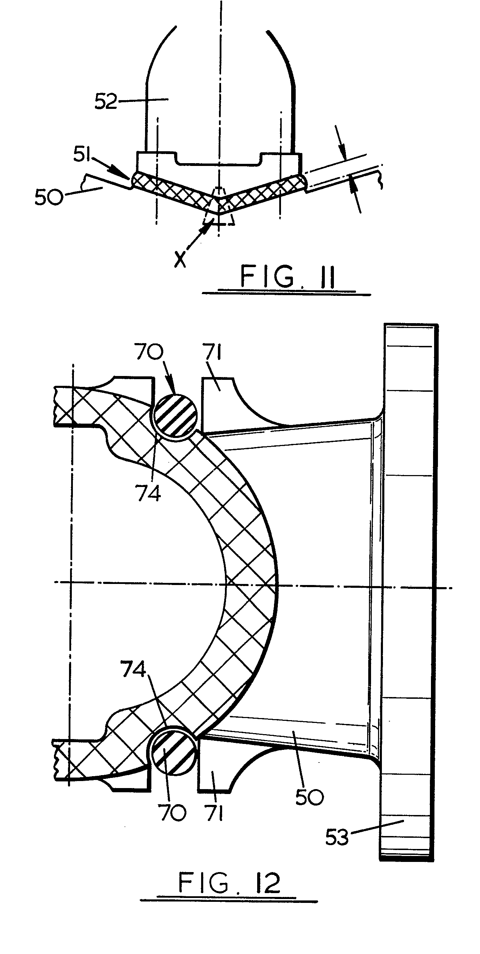

The V-shaped clamping surfaces of the valve provide an even clamping gap along the flanges except in the region X shown in Fig. 11 which corresponds with the small radius 60 at the apex of the Vee. In this region X only a small volume of elastomer is involved and the surrounding elastomeric material will accommodate to maintain an even clamping pressure throughout the flange 58 of the diaphragm 51.

The V-shaped clamping surfaces automatically give a true positioning of the bonnet assembly 52 relative to the body 50.

With this valve construction accurate drilling of holes in the body 50 and bonnet 52 for clamping bolts 70 is eliminated as the clamping bolts 70 do not have to locate the body 50, the diaphragm 51 and the bonnet assembly 52 relatively to each other since they are self locating. As shown in Fig. 12 the body 50 is provided with cast open-sided lugs 71 to receive the bolts 70. The V-shaped clamping surfaces locate the bonnet 52 and diaphragm 51 longitudinally of the body 50 during assembly and transverse location is obtained when the bolts 70 are tightened because the assembly is made with the member 65 in the valve closed position. The elimination of drilling holes in the body 50 is important where the body 50 is lined with rubber, ceramic, plastics material or glass as the lining can be cracked when any holes which contain lining material are cleaned out.

The diaphragm clamping area defined by the body 50 and bonnet assembly 52 is, as can be seen from Fig. 12, of substantially regular width. In this valve the diaphragm 51 is formed with recesses 74 instead of holes for the bolts 70. This eliminates the need to drill holes in the diaphragm 51 after moulding. It is important to note that this construction renders any leakage of fluid visible before it comes into contact with the bolts 70.

The diaphragm 51 has its flat peripheral flange 58 kinked at its centre so that it can easily take up the V-shape. The diaphragm 51 can therefore be moulded with a flat flange 58 with considerable advantages in using cheaper moulds and can be faced with a plastics material. By moulding a diaphragm 51 with a flat flange 58, the magnitude of the maximum stress in the elastomer is reduced, the maximum stress occurring when the diaphragm 51 is fully closed.

It is possible to produce the diaphragm 51 as a standard diaphragm which can be used for different amounts of opening. The standard diaphragm 51 is moulded so that it is unstressed in the open position for standard use. However such a diaphragm can be opened further than the standard use where a valve has to give the maximum throughput.

The diaphragm 51 is connected to the member 65 by a U-shaped retainer member 67, the end of which is buried in the diaphragm 51 well away from the face which in use is in contact with the fluid in the valve and the limbs of the retainer member 67 extend through two holes 68 which have a wide tolerance requiring only one machining operation. The ends of the limbs are bent to hook onto the member 65. The diaphragm 51 is accurately positioned on the member 65 by a lozenge shaped boss 72 locating in a cast recess 73 provided in the member 65.

It is envisaged that the diaphragm may be constructed as an elastomeric backing material bonded to a ductile metal such, for example, as lead or copper. Alternatively, the diaphragm may be formed wholly of a ductile metal or hard plastics material without any elastomeric material between the member 65 and the diaphragm.

22.

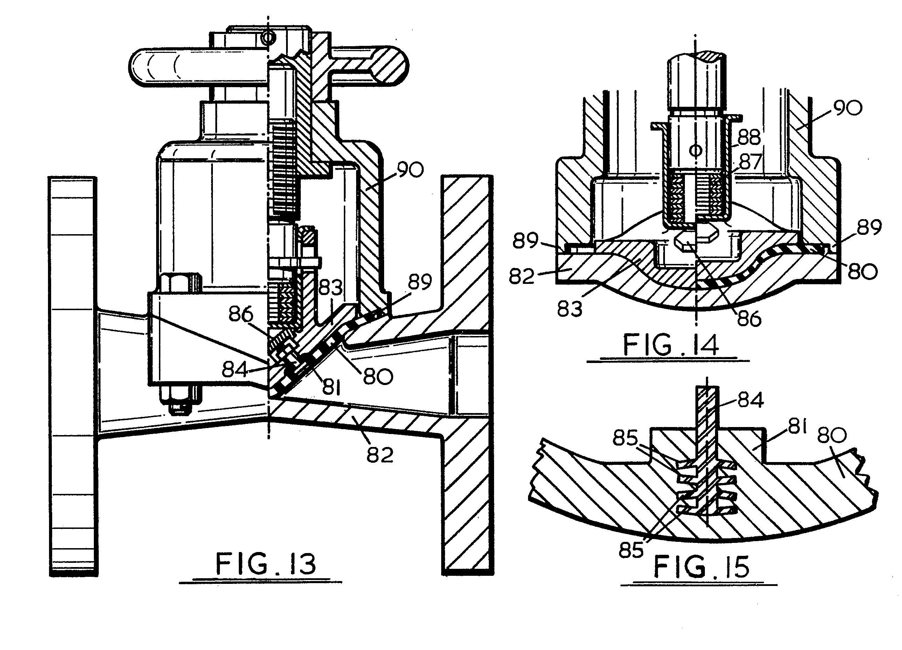

Referring now to Figs.13 to 15 there is shown a diaphragm valve in which sealing of the valve is maintained, i.e. no leakage to atmosphere, even if the diaphragm is destroyed due to, for example, abrasion, chemical attack or fire in a manner which does not use line pressure.

In this instance, it can be seen that the rubber diaphragm 80 has areas 81 of greater thickness than the general thickness of the diaphragm, which areas 81 are inboard of the diaphragm periphery and are remote from the sealing line between the body 82 and the diaphragm compressing member 83 when the valve is closed.

The diaphragm 80 is secured to the member 83 at the areas 81 by studs 84. The positioning of the securing studs 84 in the side of member 83 has the advantage that the mechanical interlock between diaphragm and stud has a better resistance to destruction than the case where the stud is centrally located where an upward vertical force would tend to pull the stud out of the diaphragm 80.

The mechanical interlock between stud and diaphragm is substantially improved if the stud 84 is formed with a number of spaced discs 85 between which the diaphragm material can flow. Such a stud 84 would be machined with the discs 85 parallel and they would then be dished as shown after coating with a bonding chemical. It will be manifest that this

23.

0099945

stud construction can be used in any other situation where a stud is called for and is not limited in use to the diaphragm valve of the present invention.

The member 83 is preferably provided with a secondary seal which becomes effective as the diaphragm 80 is destroyed. This secondary seal is formed of a non-destructible material, such for example as asbestos, copper or aluminium. Such sealing material may be set into a machined groove in the member 83 or may be incorporated in the valve body 82.

Additionally, the diaphragm-adjacent face of the member 83 may be provided with gasketting or other sealing material.

A seal of non-destructible material is preferably also provided between bonnet and body, i.e. between the body 82 and lip 89 hereinafter referred to, suitable recessing in the body and/or lip preferably being provided to accommodate same.

Upon diaphragm destruction, therefore, the secondary seal comes into play and there is thus no loss in fluid control nor leakage to atmosphere. Leakage through the stud holes in the member 83 is prevented by the provision of sealing caps 86.

A spring arrangement 87 held in a cap 88 urges the member 83 and body 82 into sealing engagement upon diaphragm destruction.

It can be seen from Figs. 14 and 15 that the peripheral edge of the diaphragm 80 is shrouded by a depending lip 89 of the bonnet 90. This lip 89 also assists in ensuring no leakage from the valve upon valve destruction.

The V-shaped clamping surfaces of the body and bonnet gives the advantage that they are easier to produce compared with those having curved clamping surfaces. The patterns and jigs are easier to produce due to the flat surfaces, production standards .can be more easily maintained and there is a saving on machining and assembly time.

While reference has been made to straight through fluid flow it is to be clearly understood that the scope of this invention includes non-straight through fluid flow arrangements.

In the above described diaphragm valves the diaphragm support faces on the valve body and the complementary flat clamping faces on the bonnet are symmetrically disposed about a plane centrally traversing the valve. This need not be so and a non-symmetrical arrangement is envisaged by the present invention.

By suitably offsetting these faces and mounting the valve with the bonnet axis horizontal there can be obtained a self-draining valve.

0099945

CLAIMS:

1. A soft seating valve comprising a body defining a through-flow passage, an elastomeric sealing or closure member associated with the body, and a compressor means mounted on the body and operatively connected with the elastomeric sealing or closure member to move the latter between positions in which the through-flow passage is fully open or fully closed, the valve being characterised in that the compressor means is of asymmetric construction and is adapted, upon destruction of the elastomeric sealing member, to make emergency sealing engagement with the valve body to close the through-flow passage.

2. A soft seating valve as claimed in claim 1, in which the asymmetric compressor means is of two-part construction, one part being movable to effect the emergency sealing.

3. A soft seating valve as claimed in claim 2, in which the movable part is disposed downstream of the through-flow passage.

4. A soft seating valve as claimed in claim 2 or 3, in which the asymmetric compressor means is carried by an operating spindle, there being associated with the compressor means and/or spindle resilient means operable to move the compressor means part into emergency sealing engagement with the valve body.

5. A soft seating valve as claimed in any one of claims 2 to 4 in which the movable compressor means part is larger than the other part.

6. A soft seating valve as claimed in claim 1 in which the asymmetric compressor means is carried by an operating spindle and is movable relative to the operating spindle to effect said emergency sealing.

7. A soft seating valve as claimed in claim 5, in which the asymmetric compressor means is connected to the operating spindle by a slot connection, there being resilient means between the operating spindle and compressor means to cause movement of the latter to effect said emergency sealing.

8. A soft seating valve as claimed in claim 1 in which the asymmetric compressor means incorporates a piston adapted to close a port in the valve body to effect said emergency sealing.

9. A soft seating valve as claimed in claim 8 in which the piston is spring loaded and is normally retained in ineffective position by the elastomeric sealing member.

10. A soft seating valve as claimed in claim 8 or 9, in which the asymmetric compressor means is carried by and is relatively movable to an operating spindle.

11. A soft seating valve as claimed in any one of claims 1 to 10 in which the asymmetric construction of the compressor means is such as to permit, upon destruction of the elastomeric sealing member, fluid pressure in the through-flow passage to assist or effect said emergency closure of the latter.

12. A soft seating valve as claimed in any one of claims 1 to 11 in which emergency sealing of the valve is effected by a means external of the valve body with or without the assistance of internal resilient means and/or fluid pressure.

13. A soft seating valve as claimed in any one of claims 1 to 12 comprising a normally-ineffective emergency sealing member associated with the compressor means and/or elastomeric sealing member and/or valve body.

14. A soft seating valve as claimed in claim 13 in which the emergency sealing member is "indestructible" and is mounted in the downstream side of the compressor means.

15. A soft seating valve as claimed in claim 14, in which the emergency sealing member is formed of asbestos.

16. A soft seating valve as claimed in any one of claims 13 or 15 in which the emergency sealing member is embedded in the elastomeric sealing member.

17. A soft seating valve as claimed in any one of claims 1 to 16 in which the asymmetric compressor means has one or more bursting holes.

18. A soft seating valve as claimed in any one of claims 1 to 17 in the form of a diaphragm valve with the diaphragm of the latter constituting the elastomeric sealing member.

19. A diaphragm valve as claimed in claim 18, in which the seating line of the emergency sealing member is different from that of the diaphragm.

20. A diaphragm valve as claimed in claim 18 or 19, comprising means for intentionally bursting the diaphragm.

21. A diaphragm valve as claimed in any one of claims 18 to 20 in which the diaphragm is of reduced thickness on its upstream side.

22. A soft seating valve as claimed in any one of claims 1 to 17 in the form of a pinch valve with the flexible tube of the latter constituting the elastomeric sealing member.

23. A soft seating valve comprising a body defining a through-flow passage, an elastomeric sealing or closure member associated with the body, and a compressor means connected with the elastomeric sealing or closure member to move the latter between positions in which the through-flow passage is fully open or fully closed, the valve being characterised in that the compressor means is adapted so that, upon destruction of the elastomeric sealing member, the through-flow passage communicates with the back side of the compressor means which makes emergency sealing engagement with the valve body to close the through-flow passage.

24. A soft seating valve as claimed in claim 23 in which the compressor means is asymmetric.

25. A soft seating valve as claimed in claim 23 in which the compressor means is symmetric and is ported at its upstream and/or downstream sides.

26. A soft seating valve as claimed in claim 25 in which, where the compressor means is ported at both its upstream and downstream sides, the porting areas are different.

27. A diaphragm valve, substantially as hereinbefore described with reference to Figs. 1 to 3, 7 and 8, or Figs. 4, 5, 7 and 8 or Fig. 6 of the accompanying drawings.

28. A diaphragm valve as claimed in claim 18 comprising a body traversed by a fluid passageway and having an opening in communication with the fluid passageway, a diaphragm for controlling fluid flow through the passageway and extending across the opening, and a bonnet housing the valve-operating mechanism and bolted to the body with the peripheral portion of the diaphragm clamped between the body and the bonnet, characterised in that the bonnet is formed with holes while the body has complementary open-sided lugs to receive the securing bolts, the diaphragm being recessed in the regions of the securing bolts.

29. A diaphragm valve as claimed in claim 28, in which the diaphragm-compressor has inclined sides to which the diaphragm is attached by studs engaging in thicker areas of the diaphragm which areas are remote from the sealing line between the body and member when the valve is closed.

30. A diaphragm valve as claimed in claim 28 or 29 in which the periphery of the diaphragm compressor and/or the flat support faces for the diaphragm on the body and/or bonnet are provided with a secondary seal to allow sealing therebetween if the diaphragm is destroyed.

31. A diaphragm valve as claimed in claim 29 or 30 in which each stud comprises a plurality of spaced discs between which diaphragm material can flow to increase mechanical interlock between the diaphragm and its moving member.

32. A diaphragm valve as claimed in claim 30 or 31, comprising a spring arrangement associated with the diaphragm compressor to urge it into body-contact if the diaphragm is destroyed.

33. A valve as claimed in any one of claims 30 to 32 in which sealing caps are provided for the stud holes in the diaphragm-moving member to prevent fluid leakage if the diaphragm is destroyed.

34. A diaphragm valve as claimed in any one of claims 29 to 33, in which the diaphragm periphery is shrouded.

35. A diaphragm valve, substantially as hereinbefore described with reference to Figs. 9 to 12 or Figs. 13 to 15 of the accompanying drawings.

FIG. 1

FIG. 2

FIG. 3

FIG. 4

FIG. 5

FIG. 6

FIG. 7

FIG. 8

FIG. 9

FIG. 10

5/6

0099945

52

51

50

X

FIG. 11

70  71

74

74

70  71

50

53

FIG. 12

FIG. 13

FIG. 14

FIG. 15

0099945

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | F 16 K 43/00 |
| A | GB-A-1 405 407 (SERCK) | 1,11, | F 16 K 7/16 |
| | *Page 2, lines 43-58* | 12,23 | |
| | --- | | |
| A | US-A-4 319 737 (WATERFIELD) | | |
| | --- | | |
| A | GB-A-1 316 318 (SAUNDERS) | | |
| | --- | | |
| A | GB-A- 751 546 (PIETER ERIKS) | | |
| | --- | | |
| A | GB-A- 322 919 (SAUNDERS) | | |
| | ----- | | |

TECHNICAL FIELDS SEARCHED (Int. Cl. 3)

F 16 K 7/00
F 16 K 43/00

The present search report has been drawn up for all claims

| Place of search THE HAGUE | Date of completion of the search 03-03-1983 | Examiner VERELST P.E.J. |
|---|---|---|